(19) Europäisches Patentamt

European Patent Office

Office européen des brevets

(11) **EP 4 527 968 A1**

(12) **EUROPEAN PATENT APPLICATION**
published in accordance with Art. 153(4) EPC

(43) Date of publication:
26.03.2025 Bulletin 2025/13

(21) Application number: 23830378.8

(22) Date of filing: 29.06.2023

(51) International Patent Classification (IPC):
*C22C 38/02* (2006.01)   *C22C 38/04* (2006.01)
*C22C 38/06* (2006.01)   *C22C 38/00* (2006.01)
*C21D 8/12* (2006.01)   *C21D 1/74* (2006.01)
*C21D 1/26* (2006.01)   *B23K 26/36* (2014.01)
*B23K 26/362* (2014.01)

(52) Cooperative Patent Classification (CPC):
B23K 26/00; B23K 26/36; B23K 26/362;
C21D 1/26; C21D 1/68; C21D 1/74; C21D 3/04;
C21D 6/00; C21D 8/12; C22C 38/00; C22C 38/02;
C22C 38/04; C22C 38/06

(86) International application number:
PCT/CN2023/103588

(87) International publication number:
WO 2024/002209 (04.01.2024 Gazette 2024/01)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 29.06.2022 CN 202210749411

(71) Applicant: BAOSHAN IRON & STEEL CO., LTD.
Shanghai 201900 (CN)

(72) Inventors:
• WU, Meihong
  Shanghai 201900 (CN)
• LI, Guobao
  Shanghai 201900 (CN)
• SHEN, Kanyi
  Shanghai 201900 (CN)

• YANG, Yongjie
  Shanghai 201900 (CN)
• JIANG, Quanli
  Shanghai 201900 (CN)
• JI, Yaming
  Shanghai 201900 (CN)
• HU, Zhuochao
  Shanghai 201900 (CN)
• ZHAO, Zipeng
  Shanghai 201900 (CN)
• ZHANG, Huabing
  Shanghai 201900 (CN)
• LING, Chen
  Shanghai 201900 (CN)

(74) Representative: Maiwald GmbH
Elisenhof
Elisenstraße 3
80335 München (DE)

(54) **ORIENTED SILICON STEEL AND MANUFACTURING METHOD THEREFOR**

(57)    The present invention provides an oriented silicon steel. The oriented silicon steel comprises: a silicon steel substrate, and an insulating coating formed on the surface of the silicon steel substrate. The insulating coating does not contain magnesium silicate and/or oxides of magnesium and aluminum. The oriented silicon steel has low iron loss, low magnetostriction, high lamination factor, and high surface coating adhesion. The present invention also provides a method for manufacturing the mentioned-above oriented silicon steel. Compared with the prior art, in this method, by performing laser processing on the silicon steel substrate with suitable parameters, an embedded layer and a continuous layer in the silicon steel substrate are removed, and the surface roughness of the silicon steel substrate is adjusted, so that the oriented silicon steel with excellent comprehensive performance is obtained; The removal process in this method is precise and controllable, causes little pollution, can be automated, and is easy to operate.

EP 4 527 968 A1

Figure 1

**Description**

**TECHNICAL FIELD**

The present invention relates to a steel and a manufacturing method therefor, in particular to an oriented silicon steel with low-loss and low-magnetostrictive and a manufacturing method therefor.

**BACKGROUND**

The existing transformer cores are generally made of the oriented silicon steel by lamination or coiling. In the process of transformer production and application, the main indicators of interest are the following two properties: no-load loss characteristics and no-load exciting current, which correspond to the loss and the exciting power of the oriented silicon steel, respectively. In recent years, with the continuous improvement of social requirements for environmental noise, transformer noise, which is mainly derived from the magnetostriction of the oriented silicon steel, has also become an important evaluation indicator of transformer performance. The main reasons for the generation of magnetostriction are the number change and rotation of 90° magnetic domains that are perpendicular to the direction of easy magnetization parallel to the rolling direction in during magnetization of the oriented silicon steel.

In the ideal state, the oriented silicon steel finished product should only have 180° magnetic domains; However, due to the defects such as deviations in orientation degree, inclusions and grain boundaries, in the actual oriented silicon steel finished product, in order to reduce the overall magnetostatic energy thereof, small additional domains-lancet domains, namely 90° domains, appear naturally between the 180° magnetic domains, which leads to the improvement of the magnetostriction of the oriented silicon steel finished product. Therefore, by reducing the 90° domains, the magnetostriction can be effectively reduced.

Currently, the oriented silicon steel is generally prepared by the method that includes the following steps: a) smelting and casting; b) heating; c) normalizing; d) cold rolling; e) decarburization annealing; f) finish annealing; g) hot stretch annealing.

In the decarburization annealing step e), it is usually necessary to coat the surface of the decarburization-annealed steel plate with an annealing separator comprising magnesium oxide as the main component; In the finish annealing step f), MgO, which acts as the annealing separator, reacts with the $SiO_2$ formed on the surface of the steel plate during the decarburization annealing process, and then a bottom layer (also called "primary coating") comprising magnesium silicate ($Mg_2SiO_4$) as the main component is formed on the surface of the silicon steel substrate. In the hot stretch annealing step g), an insulating coating liquid comprising colloidal silica and phosphate salt as the main components is coated on the surface of the steel plate after forming a layer of magnesium silicate, and then sintered to form a tension-insulation coating (also called "secondary coating").

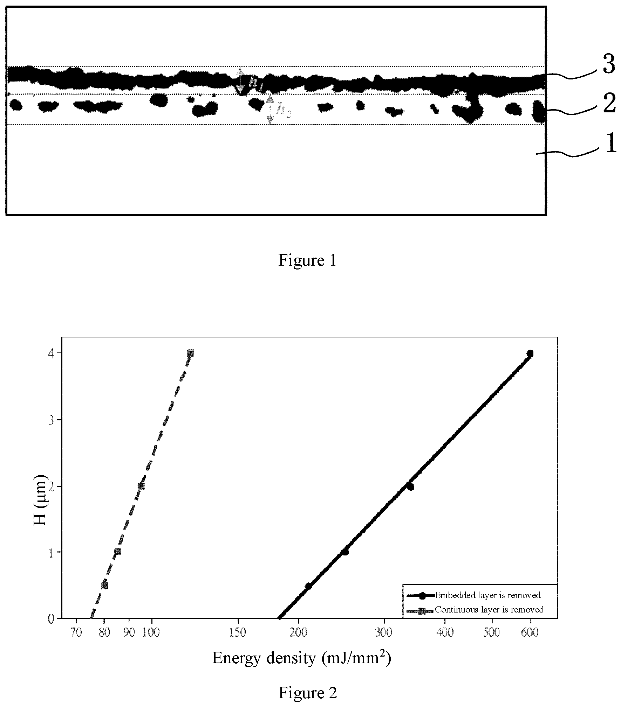

An underlying structure of the oriented silicon steel is shown in Figure 1, where the magnesium silicate layer formed on the surface of the silicon steel substrate is divided into two parts: a continuous layer 3 that is formed by diffusion and enrichment of $SiO_2$ on the surface of the silicon steel substrate, and an embedded layer 2 that is formed by the embedding of oxide particles such as $SiO_2$ and $Al_2O_3$ (which do not diffuse to the surface due to the obstruction of precipitates in the silicon steel substrate) into the core of the substrate. The main component of the continuous layer 3 is magnesium silicate, and the main components of the embedded layer 2 are magnesium silicate ($Mg_2SiO_4$) and a small amount of oxides of magnesium and aluminum ($MgAl_2O_4$). Since the embedded layer 2 is generated during the high-temperature annealing process, and has a coefficient of thermal expansion smaller than that of the steel, the local stress field generates around the oxide particles in the embedded layer, resulting in that the 90° surface closure domains are formed in the silicon steel substrate, which affects the magnetostriction performance of the subsequently obtained oriented silicon steel finished product. In addition, these oxide particles also have a pinning effect on the movement of the 180° domain walls in the silicon steel substrate, and prevent the magnetic domain rotation of the silicon steel substrate in the changing magnetic field, resulting in increased losses of the oriented silicon steel finished product.

The methods used in the prior art to reduce the loss of the oriented silicon steel mainly include the following methods: (1) A method wherein by increasing the degree of orientation of (110) [001] orientation of the finished product, magnetic flux density is increased, and therefore hysteresis loss is reduced; (2) A method wherein by increasing the content of Si in the silicon steel substrate, resistivity is increased, or the thickness of the steel plate is reduced, and therefore a classical eddy current loss is decreased; (3) A method wherein by performing laser etching on the oriented silicon steel, the width of magnetic domain is reduced, and therefore an abnormal eddy current loss is reduced.

The methods used in the prior art to reduce magnetostriction of the oriented silicon steel mainly include the following methods: (1) A method of improving the crystal orientation degree of the finished product; (2) A method of reducing the thickness of the finished product; (3) A method of increasing the tension of the coating. The above three methods can reduce the magnetostriction of the oriented silicon steel finished product, thereby reducing the transformer noise level.

There are already some technical solutions to reduce the effects of the embedded layer on the magnetostriction and iron loss performance of the oriented silicon steel finished product by eliminating the embedded layer in the prior arts.

For example, Chinese patent application CN113272456A (published on August 17, 2021) discloses a manufacturing method for a grain-oriented electromagnetic steel plate, wherein the atmosphere in the decarburization annealing process is set to have an oxidation degree in which iron-based oxide is not formed, and the silicon steel substrate is coated with an annealing separator comprising alumina as a main component in subsequent processes. In this technical solution, by strictly controlling a decarbonization dew point, no iron-based oxides (such as $Fe_2SiO_4$, FeO, etc.) are formed during the decarburization annealing process, so that the purpose of effectively eliminating oxide inclusions on the surface can be achieved. However, in this method, aluminum oxide does not react with silica and does not form a bottom layer on the substrate surface, so that the inhibitor is unstable and easy to decompose during the high-temperature annealing process, the secondary recrystallization is unstable, and the coating properties and stability of the oriented silicon steel obtained are poor.

Chinese patent application CN113272454A (published on August 17, 2021) discloses a manufacturing method for a grain-oriented electromagnetic steel plate. In this method, the residual annealing separator on the surface of the silicon steel substrate is removed by chemical grinding, so that the annealed plate surface has a roughness Ra of 0.1 $\mu$m or less, and finally the oriented silicon steel without magnesium silicate coating is obtained. However, in this technical solution, due to the use of chemical grinding, it is necessary to solve the equipment setting problems such as the concentration and temperature management of chemical solution. Therefore, from the production perspective, the practicality of this technical solution is poor. It is difficult to maintain the consistency of the concentration and temperature of chemical solution during the production of long threads.

Chinese patent application CN113286905A (published on August 20, 2021) discloses a manufacturing method for a grain-oriented electromagnetic steel plate. In the patent document, at least one of chlorides containing alkali metal, alkaline earth metal, or Bi, namely MCl, is used as an annealing separator. By using the annealing separator containing MCl, the steel plate on which no magnesium silicate coating is formed is obtained due to the corrosion of MCl in the annealing separator during the final annealing process. However, in this technical solution, due to the high requirement for atmosphere control in the annealing process of the finished product, it is easy to lead to the decomposition of inhibitors such as AlN, and (Al, Si)N, and the secondary recrystallization is unstable. Therefore, it is not an ideal manufacturing method.

**SUMMARY**

In order to solve the above technical problems existing in the prior art, on the one hand, the present invention provides an oriented silicon steel, which comprises a silicon steel substrate and an insulating coating formed on the surface of the silicon steel substrate. The oriented silicon steel does not contain magnesium silicate ($Mg_2SiO_4$) and/or oxides of magnesium and aluminum ($MgAl_2O_4$). The oriented silicon steel of the present invention has the advantages of low iron loss, low magnetostriction, high lamination factor, and high adhesion of the insulating coating on the surface.

Unless otherwise specified, "oxide of magnesium and aluminum" in the oriented silicon steel of the present invention refers to an aluminum magnesium oxide ($MgAl_2O_4$).

Preferably, the silicon steel substrate comprises the following chemical elements in mass percentage: C: 0.057-0.062%, Si: 3.12-3.25%, Mn: 0.011-0.020%, acid-soluble Al: 0.026-0.029%, N: 0.008-0.009%, and the balance being Fe and inevitable impurities.

Preferably, the insulating coating is formed by an insulating coating liquid, the insulating coating liquid is an aqueous solution containing chromic anhydride, colloidal $SiO_2$ and phosphates of Mg and Al; More preferably, the insulating coating liquid contains the following chemical components in mass percentage: aluminum dihydrogen phosphate and/or magnesium dihydrogen phosphate: 2%-25%, colloidal silica: 4%-16%, chromic anhydride: 0.15%-4.50%, and the balance being water and inevitable impurities.

Preferably, a coating amount of the insulating coating on the silicon steel substrate is 4.0g/m$^2$-4.5g/m$^2$.

Preferably, the oriented silicon steel has a magnetostriction velocity-sound pressure level LvA of ≤50db(A).

Preferably, the oriented silicon steel has an iron loss P17/50 of 0.90W/Kg or less, preferably 0.80W/Kg or less.

Preferably, the oriented silicon steel has a lamination factor of ≥97%.

On the other hand, the present invention also provides a method for manufacturing the above oriented silicon steel, comprising the following steps in order:

1) smelting and casting a molten steel to produce a slab;
2) heating the slab;
3) normalizing;
4) cold rolling to produce a cold-rolled sheet;
5) decarburization annealing;

6) high-temperature annealing to produce a silicon steel substrate, wherein the silicon steel substrate has a core, a continuous layer, and an embedded layer between the core and the continuous layer, the embedded layer contains magnesium silicate and/or oxides of magnesium and aluminum, and the continuous layer contains magnesium silicate;

7) laser processing: under nitrogen protection, the silicon steel substrate is subjected to a two-sided laser processing to remove the embedded layer and the continuous layer from the silicon steel substrate; and

8) coating with an insulating coating and performing hot stretch annealing to prepare an oriented silicon steel.

Preferably, a total thickness Hf of the silicon steel substrate after laser processing satisfies: $H_0-2h_1-2h_2-2\mu m \leq H_f \leq H_0-2h_1-2h_2$, where $H_0$ represents an initial total thickness of the silicon steel substrate, $h_1$ represents a thickness of the continuous layer, and $h_2$ represents a thickness of the embedded layer; More preferably, $H_0$: 0.19-0.29mm, $h_1 \leq 4\mu m$, $h_2 \leq 4\mu m$.

Preferably, in step 7): laser processing, an energy density I of the laser is 300-600 mJ/mm$^2$, wherein the energy density I of the laser is calculated using the following formula: $I = \dfrac{4P}{\pi d^2 f}$; wherein P is a laser power in unit W; f is a pulse repetition frequency in unit kHz; d is a spot diameter in unit $\mu m$.

Preferably, in step 7): laser processing, a laser source uses an infrared laser source.

Preferably, in step 7): laser processing, a laser uses a nanosecond pulsed laser.

Preferably, in step 7): laser processing, a scanning speed of the laser is 5-6m/s, preferably 5.5m/s; a laser power P of the laser is 50-100W, preferably 50-80W; the pulse repetition frequency f of the laser is 65-90kHz; and the spot diameter of the laser is 40-60$\mu m$.

Preferably, in step 7): laser processing, the two-sided laser processing is carried out in two stages, wherein in a first stage, the continuous layer is removed, and an energy density of the laser used in the first stage is $I_1$ or more, where $I_1 = 67.87 \times e (h_1/7.97) + 7.8$, wherein $h_1$ represents a thickness of the continuous layer in unit $\mu m$; and in a second stage, the embedded layer is removed, and an energy density of the laser used in the second stage is $I_2$ or more, where $I_2 = 282.1 \times e$ (h$_2$/4.36) - 105.6, wherein $h_2$ represents a thickness of the embedded layer in unit $\mu m$; the units of $I_1$ and $I_2$ are mJ/mm$^2$.

Preferably, in step 7): laser processing, a energy density of the laser is $I_2$ or more, where $I_2 = 282.1 \times e$ (h$_2$/4.36) - 105.6, wherein $h_2$ represents a thickness of the embedded layer.

Preferably, the silicon steel substrate after the laser processing has a surface roughness Sa of 6-8$\mu m$.

Preferably, the method for manufacturing the above oriented silicon steel satisfies one or more of the following conditions:

In step 3): normalizing, a two-stage normalization treatment is adopted: first, the slab is heated to 1100-1200°C, then cooled to 900-1000°C at a cooling rate of 1°C/s-10°C/s, and further cooled to room temperature at a cooling rate of 10°C/s-70°C/s;

In step 4): cold rolling, either a one-time cold-rolling or a two-time cold-rolling with an intermediate annealing step is adopted;

In step 5): decarburization annealing, a primary recrystallization annealing is carried out at a temperature of 800 to 900 °C, and then an annealing separator is coated on the surface of the cold-rolled sheet, wherein the annealing separator is magnesium oxide;

In step 6): high-temperature annealing, an annealing temperature is 1100 to 1200 °C, and a holding time is 20 to 30 hours; and

In step 8): hot stretch annealing, the silicon steel substrate coated with the insulating coating is heated to 800 to 900 °C and held at such temperature for 10 to 30 seconds, and then is cooled to room temperature at a cooling rate of 5 °C/s-50 °C/s to obtain the oriented silicon steel.

In addition, in coating the insulation coating of step 8) of the present invention, the insulation coating can be coated on the silicon steel substrate in a manner commonly used in the field, such as a manner of spraying the insulation coating liquid on the surface of the silicon steel substrate by using spraying method, and then baking and sintering, so as to form an insulating coating on the surface of the silicon steel substrate. Preferably, the insulating coating liquid contains the following chemical components in mass percentage: aluminum dihydrogen phosphate and/or magnesium dihydrogen phosphate: 2%-25%, colloidal silica: 4%-16%, chromic anhydride: 0.15%-4.50%, and the balance being water and inevitable impurities.

In conclusion, the oriented silicon steel of the present invention does not contain magnesium silicate and/or oxide of magnesium and aluminum, and has good insulating coating adhesion, high lamination factor, low iron loss and magnetostriction, and therefore the transformer core with reduced noise can be prepared by the above oriented silicon steel.

In the method of the present invention, by performing a suitable laser processing on the silicon steel substrate under nitrogen protection, the embedded layer and the continuous layer in the silicon steel substrate are removed, and the surface roughness of the silicon steel substrate is adjusted, so that the oriented silicon steel with low iron loss, low magnetostriction, high lamination factor and excellent adhesion of the surface insulation coating is obtained. In this method, the removal process is precise and controllable, causes little pollution, can be automated, and is easy to operate.

**BRIEF DESCRIPTION OF DRAWINGS**

Figure 1 is a cross-sectional schematic view of a silicon steel substrate in the prior art after annealing at high temperature along the thickness direction of the silicon steel substrate;
Figure 2 shows the laser energy density required to remove the continuous layer and the embedded layer respectively in the present invention.

REFERENCE SIGNS LIST:

1-core; 2-embedded layer; 3-continuous layer.

**DETAILED DESCRIPTION**

Definitions

Surface roughness Sa: It refers to a surface arithmetical mean height, which refers to the arithmetic average or geometric average of the distance between the point within the contoured surface and the center plane, and is used to characterize the roughness of the two-dimensional morphology of the object surface.

Iron loss P17/50: It indicates an iron loss per unit kg of sample when the magnetic induction intensity is 1.7T and the frequency is 50Hz. The iron loss of the oriented silicon steel sample is determined according to the national standard GBT 3655-2008 "Methods of measurement of the magnetic properties of electrical steel sheet and strip by means of an Epstein frame".

Magnetostriction test: According to IEC technical report IEC/TP 62581, the magnetostriction vibration velocity-sound pressure level of the oriented silicon steel sample is measured at B= 1.7 T using a non-contact laser Doppler vibrometer.

Lamination factor test: The lamination factor of the oriented silicon steel sample is determined according to the national standard GBT 19289-2003 "Methods of measurement of density, resistivity and stacking factor of electrical steel sheet and strip".

In the method of the present invention, by performing a suitable laser processing on the silicon steel substrate under nitrogen protection, the embedded layer and the continuous layer in the silicon steel substrate are removed, and the surface roughness of the silicon steel substrate is adjusted, so that the oriented silicon steel with low iron loss, low magnetostriction, high lamination factor and excellent adhesion of the surface insulation coating is obtained.

In the preparation process of the oriented silicon steel in the prior art, it is necessary to coat an annealing separator, such as magnesium oxide, on the surface of the silicon steel substrate before high-temperature annealing to prevent the steel plates from bonding with each other at high temperature. Therefore, the embedded layer and the continuous layer are formed on the surface of the silicon steel substrate after annealing at high temperature. The occluded oxide particles, which comprise magnesium silicate ($Mg_2SiO_4$) and oxide of magnesium and aluminum ($MgAl_2O_4$) as the main components, in the embedded layer are the main factors affecting the magnetostriction and iron loss of the oriented silicon steel.

As shown in Figure 1, an embedded layer 2 is located between a core 1 and a continuous layer 3 of a silicon steel substrate. Therefore, when the embedded layer 2 is removed, the continuous layer 3 needs to be removed as well. Compared with the removal methods based on the pickling method or mechanical method in the prior art, the laser is very stable and easy to adjust, can be processed automatically, and is easy to operate, and the removal process thereof is precise and controllable, has little pollution, and has a good removal effect. By removing the embedded layer 2, the 90°surface closure domains caused by oxide particles in the embedded layer 2 and the pinning for the 180° domain wall motion can be eliminated.

In addition, the process of removing the embedded layer in the present invention needs to be carried out in the nitrogen atmosphere, which can avoid the formation of the oxide layer on the surface of the silicon steel substrate and avoid affecting the adhesion of the subsequent insulating coating on the surface of the silicon steel substrate, and at the same time ensure that the inhibitor (such as AlN, etc.) in the high-temperature annealing step is not affected by the atmosphere, so as to avoid the imperfect secondary recrystallization. Specifically, fine AlN and other precipitates act as inhibitors, which inhibit the grain boundary migration of the primary recrystallized grains in decarburization annealing process by pinning or segregation, and promote the primary grains in (110)[001] orientation to swallow up the surrounding grains in other orientations during high-temperature annealing process to achieve abnormal growth of secondary recrystallization. Thus, the oriented silicon steel finished product has a stable and uniform (110)[001] texture and good magnetic properties.

In the technical solution of the present invention, magnetic domain refinement is not carried out. This is because there is no insulating coating on the surface of the silicon steel substrate during laser processing in the present invention, and the laser directly acts on the silicon steel substrate. In this case, the absorption rate of the laser is low, and the improvement of the magnetic properties of the silicon steel is limited, so the purpose of reducing the iron loss cannot be achieved by common magnetic domain refinement.

The total thickness $H_f$ of the laser-treated silicon steel substrate of the present invention satisfies: $H_0 - 2h_1 - 2h_2 - 2\mu m \leq H_f < H_0 - 2h_1 - 2h_2$. In the present invention, $H_0$ is a thickness of the silicon steel substrate after high-temperature annealing, which is measured by a micrometer; $h_1$ and $h_2$ are measured on the metallographic photos of the section of the silicon steel substrate along the thickness direction by using optical microscope. $h_1$ is an average thickness of the continuous layer, which is an average value of the thickness of the continuous layer in 10 different fields of view. $h_2$ is an average thickness of the embedded layer, which is an average value of the thickness of the embedded layer in 10 different fields of view.

In the present invention, it is necessary to finely control the degree of laser etching on the surface of the silicon steel substrate after high-temperature annealing. It is not only necessary to completely remove the embedded layer 2 and the continuous layer 3, but also to avoid excessive loss of the core tissue. Specifically, in the present invention, it is desired to remove the embedded layer completely while ensuring that the etching depth of core 1 is within $2\mu m$.

Generally, after high-temperature annealing, the thickness $H_0$ of the silicon steel substrate is 0.19-0.29mm, the thickness $h_1$ of the continuous layer is $\leq 4\mu m$, and the thickness $h_2$ of the embedded layer is $\leq 4\mu m$.

In the laser processing step of the present invention, the energy density I of the laser is 300-600mJ/mm$^2$, and the energy density I of the laser is calculated by the following formula:

$$I = \frac{4P}{\pi d^2 f};$$

, where P is a laser power in unit W; f is a pulse repetition frequency in unit kHz; d is a spot diameter in unit $\mu m$.

Specifically, in the process wherein laser etching is performed on a silicon steel substrate after high-temperature annealing by using a two-sided laser, the laser energy density I is first adjusted in the first region of the silicon steel substrate. In this process, the laser power P, pulse repetition frequency f and spot diameter d can be continuously changed for performing multiple laser etching operations until a laser energy density I can be determined, wherein at the laser energy density I, the embedded layer can be completely removed, and the etching depth of the core of the silicon steel substrate is within $2\mu m$. Then, the second region of the silicon steel substrate is etched at the above determined energy density I, wherein the second region is the region in the silicon steel substrate other than the first region.

As shown in Figure 2, when the energy density of the laser is in the range of 300-600mJ/mm$^2$, the embedded layer and the continuous layer on the surface of the silicon steel substrate can be effectively removed without losing too much core tissue of the substrate. Because the thickness of the embedded layer is usually $4\mu m$ or less, the energy density of the laser is usually not more than 600mJ/mm$^2$. When the energy density of the laser is more than 600mJ/mm$^2$, it is not only bad for energy saving but also will remove too much substrate; On the other hand, even if the thickness of the embedded layer is very thin, it is necessary to select a laser energy density of 300mJ/mm$^2$ or more to ensure that the embedded layer is completely removed.

Since the main components of the embedded layer and the continuous layer are both magnesium silicate, the laser source is preferably an infrared laser source with high absorption rate and low reflectivity to magnesium silicate is preferred in the laser processing of the present invention, such as an infrared laser source with a wavelength of 1064nm.

Preferably, in order to achieve a high single-pulse instantaneous peak power density, a nanosecond pulsed laser is used to remove the embedded layer and the continuous layer.

After extensive experiments and analysis, the inventor found that the laser energy density required to remove the continuous layer and the embedded layer can be determined by the thickness $h_1$ of the continuous layer and the thickness $h_2$ of the embedded layer.

Specifically, Figure 2 shows the relationship between the thickness of the continuous layer and the embedded layer and the required pulsed laser energy density when the laser processing is carried out in two stages under the nitrogen protection. When the continuous layer is removed in the first stage, the energy density of the laser is $I_1$ or more, wherein $I_1 = 67.87 \times e(h_1/7.97) + 7.8$, where $h_1$ represents a thickness of the continuous layer; When the embedded layer is removed in the second stage, the energy density of the laser is $I_2$ or more, wherein $I_2 = 282.1 \times e(h_2/4.36) - 105.6$, where $h_2$ represents

a thickness of the embedded layer.

In the first stage of removing the continuous layer, since the continuous layer (magnesium silicate layer) is an opaque oxide layer, the removal mechanism is ablation removal mechanism: The laser with an energy density of $I_1$ is used to continuously pulse on the silicon steel substrate, and the pulse heat accumulation causes the surface temperature of the continuous layer to rise, thereby changing the morphology and properties of the continuous layer and causing the continuous layer to separate from the silicon steel substrate.

In the second stage of removing the embedded layer, when the laser energy density exceeds the complete removal threshold of the continuous layer, the pulse laser will irradiate the embedded layer, and the temperature of the oxide particles in the embedded layer will rise sharply after absorbing the laser energy, resulting in a series of physical effects such as bulk, gasification, thermal shock, thermal vibration, acoustic shock fragmentation and etc. Finally, the embedded layer (mainly the oxide particles in the embedded layer) is separated from the core, thereby achieving the removal of the embedded layer.

Since the laser energy density required to remove the embedded layer is higher than that required to remove the continuous layer, it is not necessary to remove the continuous layer and the embedded layer respectively in two steps. In practice, the value of $I_2$ can be calculated according to the thickness of the embedded layer, and then a laser energy density with a value of $I_2$ or more can be selected to remove the continuous layer and the embedded layer together.

It should be noted that $I_2$ also needs to be in the range of 300-600mJ/mm$^2$ to achieve complete removal of the embedded layer. Preferably, $I_2$ is set to a value that can achieve the purpose of low noise when the transformer core made of the oriented silicon steel operates.

The surface roughness Sa of the silicon steel substrate determines the adhesion of the insulating coating on the silicon steel substrate and the lamination factor of the oriented silicon steel finished product. The smaller the surface roughness is, the worse the adhesion of the insulating coating is; while the larger the surface roughness is, the better the adhesion of the insulation coating is, but the thickness of the insulation coating will also increase, resulting in the reduction of the lamination factor of the oriented silicon steel finished product. Therefore, it is necessary to control the surface roughness of the silicon steel substrate in a suitable range. In the present invention, the surface roughness Sa of the silicon steel substrate is preferably in the range of 6-8$\mu$m. Under the condition of this surface roughness, the insulating coating can be tightly attached to the surface of the silicon steel substrate, and the lamination factor of the oriented silicon steel can be 97% or more.

The surface roughness Sa of the silicon steel substrate is mainly affected by laser power, scanning speed and repetition frequency.

After laser processing, a groove-shaped "wave-like" morphology with equal intervals will be left on the substrate surface. The "wave trough" in the laser-treated surface microzone is determined by the width and depth of the grooves, and the "wave crest" in the surface microzone is determined by the molten dendrite structure at the spot overlap. The unevenness between the "wave trough" and the "wave crest" directly affects the value of the surface roughness Sa in the microzone.

Laser power P has the most significant effect on the surface roughness. With the increase of laser power, the width and depth of the groove increase, and the value of the surface roughness Sa increases. In the present invention, the laser power P is preferably in the range of 50-100W, and more preferably 50-80W.

The surface roughness Sa of the silicon steel substrate is also affected by the scanning speed of the laser. In the present invention, the scanning speed of the laser is preferably in the range of 5-6m/s, and more preferably 5.5m/s. When the scanning speed of the laser is higher than 6m/s, the value of "wave crest" at the spot overlap becomes higher, resulting in that the surface roughness Sa is too high. When the scanning speed of the laser is less than 5m/s, a thermal effect caused by overlap of the spots increases, and the groove depth further increases, that is, the value of "wave trough" deepens, resulting in that the surface roughness Sa is too high.

In addition, the repetition frequency f of the laser will also affect the surface roughness Sa of the silicon steel substrate. In the present invention, the repetition frequency f of the laser is preferably 65-90 kHz. When the laser power is constant and the repetition frequency f is less than 65 kHz, the energy density of the single pulse increases, and the width and depth of the groove further increase, resulting in that the value of the surface roughness Sa is too high. When the repetition frequency f is greater than 90kHz, the energy density of the single pulse decreases, the scanning speed needs to be reduced, the thermal effect caused by overlap of the spots increases, and the groove depth increases, that is, the value of "wave trough" deepens, resulting in that the value of the surface roughness Sa is too high.

The insulating coating is used to improve the insulation property of the surface of the silicon steel substrate. The insulating coating liquid widely used in the prior art is an aqueous solution mainly comprising chromic anhydride, colloidal $SiO_2$ and phosphates of Mg and Al. After the insulation coating liquid is sintered, a transparent insulating coating will be formed on the surface of the silicon steel substrate.

When the thickness of the insulating coating is too thin, the tension imparted to the substrate by the insulating coating is small, and the magnetic optimization is insufficient. When the thickness of the insulating coating is too thick, the lamination factor of the finished product will be affected, and it is easy to have defects such as powder loss and white edge in the shearing process. In the present invention, it is preferred that the coating amount of the insulating coating on the silicon steel substrate is 4.0-4.5g/m$^2$.

In the description of the embodiments of this application, the terms "first", "second", etc., are used only to distinguish the description, and are not understood as indicating or implying relative importance.

It should also be noted that, unless otherwise explicitly specified and limited, the terms "set", "connect" and "link" should be understood in a broad sense, for example, it can be understood as a direct connection, or understood as an indirect connection implemented through an intermediary, or understood as internal communication between two components. A person with ordinary skill in the art can understand the specific meanings of the above terms in the embodiments of this application according to specific situations.

In order to make the purposes, technical solutions and advantages of the present invention clearer, the following further describes the embodiments of the present invention in detail with reference to the accompanying drawings.

**Examples 1-6 and Comparative Examples 1-15**

The oriented silicon steel in Examples 1-6 was prepared by performing sequentially the following steps:

1) Smelting and casting: according to the formulation shown in Table 1, molten steel was smelted and cast to produce a slab;
2) Heating the slab: the slab was heated to 1200 to 1280 °C and held at such temperature for 1 to 4 h, and then hot rolled;
3) Normalizing: a two-stage normalization treatment was used, wherein first, the slab was heated to 1100-1200°C, then cooled to 900-1000°C at a cooling rate of 1°C/s-10°C/s, and subsequently cooled to room temperature at a cooling rate of 10°C/s-70°C/s;
4) Cold rolling: once cold rolling or twice cold rolling with an intermediate annealing step was used to produce a cold-rolled sheet;
5) Decarburization annealing: a primary recrystallization annealing was performed at a temperature of 800 to 900 °C, and then an annealing separator was coated on the surface of the cold-rolled sheet;
6) High-temperature annealing: an annealing temperature was 1100 to 1200 °C, and a holding time was 20 to 30 hours;
7) Laser processing: the silicon steel substrate was subjected to a two-sided laser processing by nanosecond pulsed laser under the nitrogen protection to remove the embedded layer and continuous layer from the silicon steel substrate, and the laser processing conditions are shown in Table 4;
8) Coating with an insulating coating and hot stretch annealing: an insulating coating liquid was coated on the surface of the silicon steel substrate, baked and sintered to form the insulating coating on the surface of the silicon steel substrate; and then the silicon steel substrate coated with the insulating coating is heated to 800 to 900 °C, and held at such temperature for 10 to 30s, and further cooled to room temperature at a cooling rate of 5 °C/s-50 °C/s to obtain the oriented silicon steel.

The oriented silicon steel in Comparative Examples 1-15 were prepared in basically the same way as above, except that only in the Comparative Examples 1, 6 and 11, the laser processing of the present invention was not used, and in other Comparative Examples, the energy density of the laser processing did not be adjusted according to the thickness of the continuous layer and the embedded layer, and/or the surface roughness Sa of the laser-treated silicon steel substrate is not controlled.

Table 1 shows the chemical composition other than Fe and unavoidable impurities of the silicon steel substrate and the thickness H (including the total thickness of the silicon steel substrate and the insulating coating on its surface) of the oriented silicon steel finished products in Examples 1-6 of the present invention and Comparative Examples 1-15.

Table 1

| No. | C [wt%] | Si [wt%] | Mn [wt%] | Acid-soluble Al [wt%] | N [wt%] | Thickness of finished product H [mm] |
|---|---|---|---|---|---|---|
| Examples 1-2 | 0.061 | 3.25 | 0.011 | 0.026 | 0.009 | 0.30 |
| Comparative Examples 1-5 | | | | | | |
| Examples 3-4 | 0.062 | 3.24 | 0.020 | 0.027 | 0.009 | 0.27 |
| Comparative Examples 6-10 | | | | | | |

(continued)

| No. | C [wt%] | Si [wt%] | Mn [wt%] | Acid-soluble Al [wt%] | N [wt%] | Thickness of finished product H [mm] |
|---|---|---|---|---|---|---|
| Examples 5-6 | 0.057 | 3.12 | 0.012 | 0.0288 | 0.0082 | 0.23 |
| Comparative Examples 11-15 | | | | | | |

The insulating coating liquid coated on the surface of the silicon steel substrate in Examples 1-6 of the present invention and Comparative Examples 1-15 contain the following chemical components in mass percentage: aluminum dihydrogen phosphate and/or magnesium dihydrogen phosphate: 2%-25%, colloidal silica: 4%-16%, chromic anhydride: 0.15%-4.50%, and the balance being water and inevitable impurities.

Table 2 lists the chemical composition of the insulating coating liquid coated on the surface of the silicon steel substrate in Examples 1-6 of the present invention and Comparative Examples 1-15.

Table 2 (The units of values in the table are wt.%, with the balance being water and inevitable impurities)

| No. | Aluminum dihydrogen phosphate | Magnesium biphosphate | Colloidal silicon dioxide | Chromic anhydride |
|---|---|---|---|---|
| Examples 1-2 | 12% | 0 | 16% | 0.15% |
| Comparative Examples 1-5 | | | | |
| Examples 3-4 | 10% | 10% | 15% | 1% |
| Comparative Examples 6-10 | | | | |
| Examples 5-6 | 8% | 8% | 14% | 2% |
| Comparative Examples 11-15 | | | | |

Table 3 lists the specific parameters of the manufacturing process of the oriented silicon steel in Examples 1-6 of the present invention and Comparative Examples 1-15.

Table 3

| No. | Normalizing | | | | | Decarbonization annealing | High-temperature annealing | | Hot stretch annealing | | |
|---|---|---|---|---|---|---|---|---|---|---|---|
| | Heating temperature [°C] | Cooling rate at the first temperature fall [°C/s] | Temperature after the first temperature fall [°C] | Cooling rate at the second temperature fall [°C/s] | Temperature after cooling [°C] | Temperature at a primary recrystallization annealing [°C] | Annealing temperature [°C] | Holding time [h] | Heating temperature [°C] | Holding time [s] | Cooling rate [°C/s] |
| Examples1-2 | 1110 | 2 | 900 | 10 | 20 | 800 | 1100 | 30 | 900 | 10 | 5 |
| Comparative Examples 1-5 | | | | | | | | | | | |
| Examples 3-4 | 1120 | 4 | 930 | 20 | 20 | 820 | 1150 | 25 | 850 | 20 | 10 |
| Comparative Examples 6-10 | | | | | | | | | | | |
| Examples 5-6 | 1140 | 5 | 930 | 30 | 20 | 840 | 1200 | 20 | 800 | 30 | 30 |
| Comparative Examples 11-15 | | | | | | | | | | | |

EP 4 527 968 A1

The thickness of the continuous layer and the embedded layer in the silicon steel substrate after high-temperature annealing, the laser power, repetition frequency, scanning speed and spot diameter used in the laser treatment process, laser energy density $I_2$ required in theory to remove the embedded layer and laser energy density I used in practice, and the surface roughness Sa after laser processing in Examples 1-6 of the present invention and Comparative Examples 1-15 are list in Table 4.

Table 4

| No. | Thickness of continuous layer [μm] | Thickness of embedded layer [μm] | Power [W] | Repetition frequency [kHz] | Speed [m/s] | Spot diameter [μm] | $I_2$ [mJ/mm$_2$] | Energy density I [mJ/mm$^{2]}$ | Surface roughness Sa [μm] |
|---|---|---|---|---|---|---|---|---|---|
| Comparativ e example 1 | 3.1 | 3.4 | - | - | - | - | 510 | - | - |
| Comparativ e example 2 | 3.1 | 3.4 | **16** | 80 | 5.5 | 50 | 510 | 102 | 3.2 |
| Comparativ e example 3 | 3.1 | 3.4 | **160** | 80 | 5.5 | 50 | 510 | 1020 | 11.5 |
| Comparativ e example 4 | 3.1 | 3.4 | 60 | **60** | 5.5 | 50 | 510 | 510 | 5.2 |
| Comparativ e example 5 | 3.1 | 3.4 | **120** | **120** | 5.5 | 50 | 510 | 510 | 9.1 |
| Example 1 | 3.1 | 3.4 | 80 | 80 | 5.5 | 50 | 510 | 510 | 6.5 |
| Example 2 | 3.1 | 3.4 | 100 | 90 | 5.5 | 50 | 510 | 566 | 7.8 |
| Comparativ e example 6 | 2.6 | 2.8 | - | - | - | - | 431 | - | - |
| Comparativ e example 7 | 2.6 | 2.8 | **20** | 70 | 5.5 | 50 | 431 | **145** | **3.5** |
| Comparativ e example 8 | 2.6 | 2.8 | **120** | 70 | 5.5 | 50 | 431 | **873** | **11.0** |
| Comparativ e example 9 | 2.6 | 2.8 | **40** | **47** | 5.5 | 50 | 431 | 433 | **5.5** |
| Comparativ e example 10 | 2.6 | 2.8 | **100** | **117** | 5.5 | 50 | 431 | 435 | **9.0** |
| Example 3 | 2.6 | 2.8 | 60 | 70 | 5.5 | 50 | 431 | 436 | 6.6 |
| Example 4 | 2.6 | 2.8 | 85 | 80 | 5.5 | 50 | 431 | 541 | 7.5 |
| Comparativ e example 11 | 2.1 | 2.3 | - | - | - | - | 372 | - | - |
| Comparativ e example 12 | 2.1 | 2.3 | **15** | 68 | 5.5 | 50 | 372 | **112** | **3.1** |
| Comparativ e example 13 | 2.1 | 2.3 | **100** | 68 | 5.5 | 50 | 372 | **749** | **10.8** |
| Comparativ e example 14 | 2.1 | 2.3 | **30** | **40** | 5.5 | 50 | 372 | 381 | **4.3** |
| Comparativ e example 15 | 2.1 | 2.3 | **100** | **140** | 5.5 | 50 | 372 | 363 | **10.7** |
| Example 5 | 2.1 | 2.3 | 50 | 68 | 5.5 | 50 | 372 | 374 | 6.3 |
| Example 6 | 2.1 | 2.3 | 92 | 80 | 5.5 | 50 | 372 | 586 | 7.6 |

EP 4 527 968 A1

The prepared oriented silicon steels in the Examples 1-6 and Comparative Examples 1-15 were sampled respectively, and non-contact Laser Doppler Vibrometers (TD9600) were used to measure the magnetostrictive performance (a magnetostriction velocity-sound pressure level LvA) of the oriented silicon steel sample in the examples and comparative examples at the conditions of B=1.7T and f=-2MPa (in the actual working condition of the transformer, the oriented silicon steel is subjected to a compressive stress of 2-3 MPa). For the specific measurement method, it can be seen in the International Electrotechnical Commission (IEC) technical report -IEC/TP 62581.

Test sheet of 300mm×30mm was cut out from the oriented silicon steel sample on which an insulating coating is formed in Examples 1-6 and Comparative Examples 1-15. The sample was tightly wound around a brass cylinder with a diameter of 20mm, gradually bent by 180°, and then stretched out flat. Then, the uncracked and peeled area of the coating on the inner surface of the sample was measured, and the residual area ratio (%) of the insulating coating was calculated.

The adhesiveness of the insulating coating was evaluated in 3 grades: "◎" means that the residual area rate of the insulating coating was 100%. "○" means that the residual area rate of the insulating coating was 90% or more. "×" means that the residual area rate of the insulating coating was less than 90%.

Iron loss P17/50 (representing the iron loss per kg of sample when the magnetic induction intensity is 1.7T and the frequency is 50Hz): The iron loss of the oriented silicon steel in Examples 1-6 and Comparative Examples 1-15 was determined using the national standard GBT 3655-2008 "Methods of measurement of the magnetic properties of electrical steel sheet and strip by means of an Epstein frame".

Lamination factor: The lamination factor was determined using the national standard GBT 19289-2003 "Methods of measurement of density, resistivity and stacking factor of electrical steel sheet and strip".

Table 5 lists the performance test results for the oriented silicon steels in Examples 1-6 and Comparative Examples 1-15.

Table 5

| No. | Iron loss P17/50 [W/Kg] | Magnetostrictive velocity-sound pressure level LvA [db (A)] | Lamination factor [%] | Adhesiveness |
|---|---|---|---|---|
| Comparative Example 1 | 0.96 | 54.2 | 96.7 | ◎ |
| Comparative Example 2 | 1.02 | 54.4 | 97.0 | × |
| Comparative Example 3 | 0.84 | 48.0 | 95.0 | ◎ |
| Comparative Example 4 | 0.86 | 48.4 | 98.4 | ○ |
| Comparative Example 5 | 0.85 | 48.5 | 95.4 | ◎ |
| Example 1 | 0.87 | 48.1 | 98.2 | ◎ |
| Example 2 | 0.85 | 48.8 | 97.5 | ◎ |
| Comparative Example 6 | 0.92 | 53.9 | 96.2 | ◎ |
| Comparative Example 7 | 0.99 | 54.0 | 96.7 | × |
| Comparative example 8 | 0.82 | 47.1 | 95.0 | ◎ |
| Comparative Example 9 | 0.81 | 47.3 | 97.9 | ○ |
| Comparative Example 10 | 0.80 | 47.5 | 95.2 | ◎ |
| Example 3 | 0.82 | 47.2 | 97.7 | ◎ |
| Example 4 | 0.80 | 47.3 | 97.5 | ◎ |
| Comparative Example 11 | 0.88 | 52.1 | 95.7 | ◎ |
| Comparative Example 12 | 0.92 | 52.6 | 96.0 | × |
| Comparative Example 13 | 0.80 | 47.3 | 94.2 | ◎ |
| Comparative Example 14 | 0.79 | 47.1 | 97.4 | ○ |
| Comparative Example 15 | 0.78 | 47.3 | 94.2 | ◎ |
| Example 5 | 0.79 | 47.0 | 97.2 | ◎ |
| Example 6 | 0.78 | 46.8 | 97.0 | ◎ |

As shown in Table 5, compared with Comparative Examples 1-15, the comprehensive performance of each Examples of the present invention, including iron loss, magnetostriction, lamination factor and adhesiveness, is superior to that of Comparative Examples 1-15.

As shown in Table 5, in Comparative Examples 1, 6 and 11 in which the oriented silicon steels have not been laser treated. the adhesiveness is good, but the lamination factor is less than 97%, and the iron loss and magnetostriction are both poor.

In Comparative examples 2, 7 and 12, the oriented silicon steel has been treated with laser, but the energy density of the laser used is low. Thus, only the continuous layer is removed and the embedded layer is not removed. As a result, the above problems caused by the existence of the embedded layer in the oriented silicon steel cannot be solved. The obtained oriented silicon steel has poor iron loss, magnetostriction and insulating coating adhesion.

In Comparative Examples 3, 8 and 13, the oriented silicon steel has been laser treated, but the power and the energy density of the laser processing are too high. Thus, not only is the embedded layer removed, but the core of the substrate is also largely removed. Therefore, in the obtained oriented silicon steel, the iron loss and magnetostriction are relatively low, but the lamination factor and coating adhesiveness are relatively poor.

In Comparative Examples 4, 9 and 14, the oriented silicon steel has been laser treated, and the energy density of the laser used is appropriate, but the power of the laser used is too low. Thus, the embedded layer is completely removed, but the surface roughness Sa of the substrate is too low, which leads to that the adhesiveness of the insulating coating is significantly deteriorated.

In Comparative Examples 5, 10 and 15, the oriented silicon steel has been laser treated, and the energy density of the laser used is appropriate, but the power of the laser used is too high. Thus, the embedded layer is completely removed, but the surface roughness Sa of the substrate is too high, which leads to that the lamination factor is significantly reduced.

In summary, in the present invention, the continuous layer and the embedded layer in the silicon steel substrate are removed by controlling the parameters of laser processing, and the adhesiveness of the insulating coating and lamination factor are improved by detecting the surface roughness of the silicon steel substrate after laser processing, and thus the oriented silicon steel with low loss, low magnetostriction, high lamination factor and high adhesion of the insulating coating is obtained.

It should be noted that all the technical features described in this application may be freely combined or combined in any way, unless mutual contradiction occurs. It will be apparent to those skilled in the art that various modifications and variations can be made in the present invention without departing from the scope of the invention. For example, features illustrated or described as part of one embodiment may be used in conjunction with another embodiment to yield a still further embodiment. Therefore, it is intended that the present invention covers such modifications and variations as come within the scope of the appended claims and their equivalents.

## Claims

1. An oriented silicon steel, comprising:

    a silicon steel substrate, and
    an insulating coating formed on the surface of the silicon steel substrate,
    the oriented silicon steel does not contain magnesium silicate and/or oxides of magnesium and aluminum.

2. The oriented silicon steel as claimed in claim 1, wherein the silicon steel substrate comprises the following chemical elements in mass percentage: C: 0.057-0.062%, Si: 3.12-3.25%, Mn: 0.011-0.020%, acid-soluble Al: 0.026-0.029%, N: 0.008-0.009%, and the balance being Fe and inevitable impurities.

3. The oriented silicon steel as claimed in claim 1, wherein the insulating coating is formed by an insulating coating liquid, the insulating coating liquid is an aqueous solution containing chromic anhydride, colloidal $SiO_2$ and phosphates of Mg and Al; preferably, the insulating coating liquid contains the following chemical components in mass percentage: aluminum dihydrogen phosphate and/or magnesium dihydrogen phosphate: 2%-25%, colloidal silica: 4%-16%, chromic anhydride: 0.15%-4.50%, and the balance being water and inevitable impurities; preferably, a coating amount of the insulating coating on the silicon steel substrate is $4.0g/m^2$ -$4.5g/m^2$.

4. The oriented silicon steel as claimed in any one of claims 1-3, wherein the oriented silicon steel has a magnetostriction velocity-sound pressure level LvA of ≤50db(A).

5. The oriented silicon steel as claimed in any one of claims 1-3, wherein the oriented silicon steel has an iron loss P17/50 of 0.90W/Kg or less, preferably 0.80W/Kg or less.

6. The oriented silicon steel as claimed in any one of claims 1-3, wherein the oriented silicon steel has a lamination factor of ≥97%.

7. A method for manufacturing the oriented silicon steel as claimed in any one of claims 1-6, comprising the following steps in order:

   1) smelting and casting a molten steel to produce a slab;
   2) heating the slab;
   3) normalizing;
   4) cold rolling to produce a cold-rolled sheet;
   5) decarburization annealing;
   6) high-temperature annealing to produce a silicon steel substrate, wherein the silicon steel substrate has a core, a continuous layer, and an embedded layer between the core and the continuous layer, and wherein the embedded layer contains magnesium silicate and/or oxides of magnesium and aluminum, and the continuous layer contains magnesium silicate;
   7) laser processing: the silicon steel substrate is subjected to a two-sided laser processing under nitrogen protection to remove the embedded layer and the continuous layer from the silicon steel substrate; and
   8) coating with an insulating coating and performing hot tensile annealing to obtain the oriented silicon steel.

8. The method as claimed in claim 7, wherein a total thickness $H_f$ of the silicon steel substrate after laser processing satisfies: $H_0-2h_1-2h_2-2\mu m \leq H_f \leq H_0-2h_1-2h_2$, wherein $H_0$ represents an initial total thickness of the silicon steel substrate, $h_1$ represents a thickness of the continuous layer, and $h_2$ represents a thickness of the embedded layer.

9. The method as claimed in claim 8, wherein Ho: 0.19-0.29mm, $h_1 \leq 4\mu m$, $h_2 \leq 4\mu m$.

10. The method as claimed in claim 8, wherein in step 7): laser processing, an energy density I of the laser is 300-600mJ/mm$^2$, wherein the energy density I of the laser is calculated using the following formula: $I = \dfrac{4P}{\pi d^2 f}$; wherein P is a laser power, in unit W; f is a pulse repetition frequency, in unit kHz; d is a spot diameter, in unit $\mu m$.

11. The method as claimed in claim 10, wherein in step 7): laser processing, a scanning speed of the laser is 5-6m/s, preferably 5.5m/s; the laser power P is 50-100W, preferably 50-80W; the pulse repetition frequency f is 65-90kHz; and the spot diameter is 40-60$\mu m$.

12. The method as claimed in claim 10, wherein in step 7): laser processing, the two-sided laser processing is carried out in two stages, wherein in a first stage, the continuous layer is removed, and the energy density of the laser used in the first stage is $I_1$ or more, where $I_1 = 67.87 \times e\,(h_1/7.97) + 7.8$, wherein $h_1$ represents the thickness of the continuous layer; and in a second stage, the embedded layer is removed, and the energy density of the laser used in the second stage is $I_2$ or more, where $I_2 = 282.1 \times e\,(h_2/4.36) - 105.6$, wherein $h_2$ represents the thickness of the embedded layer.

13. The method as claimed in claim 10, wherein in step 7): laser processing, the energy density I of the laser is $I_2$ or more, where $I_2 = 282.1 \times e\,(h_2/4.36) - 105.6$, wherein $h_2$ represents the thickness of the embedded layer.

14. The method as claimed in any one of claims 7-13, wherein the silicon steel substrate after laser processing has a surface roughness Sa of 6-8$\mu m$.

15. The method as claimed in any one of claims 7-13, wherein the method satisfies one or more of the following conditions:

   in step 3): normalizing, a two-stage normalization treatment is adopted: first, the slab is heated to 1100-1200°C, then cooled to 900-1000°C at a cooling rate of 1°C/s-10°C/s, and further cooled to room temperature at a cooling rate of 10°C/s-70°C/s;
   in step 4): cold rolling, either a one-time cold-rolling or a two-time cold-rolling with an intermediate annealing step is adopted;
   in step 5): decarburization annealing, a primary recrystallization annealing is carried out at a temperature of 800 to 900 °C, and then an annealing separator is coated on the surface of the cold-rolled sheet, wherein the annealing separator is magnesium oxide;
   in step 6): high-temperature annealing, an annealing temperature is 1100 to 1200 °C, and a holding time is 20 to 30 hours; and

in step 8): hot stretch annealing, the silicon steel substrate coated with the insulating coating is heated to a temperature of 800 to 900 °C and held at such temperature for 10 to 30 seconds, and then cooled to room temperature at a cooling rate of 5 °C/s-50 °C/s to obtain the oriented silicon steel.

16. The method as claimed in any one of claims 7-13, wherein the insulating coating is formed by an insulation coating liquid, the insulation coating liquid contains the following chemical components in mass percentage: aluminum dihydrogen phosphate and/or magnesium dihydrogen phosphate: 2%-25%, colloidal silica: 4%-16%, chromic anhydride: 0.15%-4.50%, and the balance being water and inevitable impurities.

Figure 1

Figure 2

## INTERNATIONAL SEARCH REPORT

| International application No. |
| --- |
| **PCT/CN2023/103588** |

**A. CLASSIFICATION OF SUBJECT MATTER**

C22C38/02(2006.01)i; C22C38/04(2006.01)i; C22C38/06(2006.01)i; C22C38/00(2006.01)i; C21D8/12(2006.01)i; C21D1/74(2006.01)i; C21D1/26(2006.01)i; B23K26/36(2014.01)i; B23K26/362(2014.01)i

According to International Patent Classification (IPC) or to both national classification and IPC

**B. FIELDS SEARCHED**

Minimum documentation searched (classification system followed by classification symbols)

C22C C21D B23K

Documentation searched other than minimum documentation to the extent that such documents are included in the fields searched

Electronic data base consulted during the international search (name of data base and, where practicable, search terms used)

CNTXT, DWPI, CKNI: 方向, 取向, 硅钢, 除去, 去除, 硅酸镁, 镁, Mg, 铝, Al, 氧化物, 氧化层, 底层, 冷轧, 退火, 激光, 绝缘, 涂层, 碳, C, 硅, Si, 锰, Mn, 氮, N, oriented, silicone steel, remov+, clean+, magnesium silicate, oxide, oxide surface layer, bottom layer, cold rolling, annealing, laser?, insulat+, coating, layer

**C. DOCUMENTS CONSIDERED TO BE RELEVANT**

| Category* | Citation of document, with indication, where appropriate, of the relevant passages | Relevant to claim No. |
| --- | --- | --- |
| X | JP S63250419 A (KAWASAKI STEEL CORP.) 18 October 1988 (1988-10-18) description, page 7, embodiment 1 | 1-6 |
| Y | JP S63250419 A (KAWASAKI STEEL CORP.) 18 October 1988 (1988-10-18) description, page 7, embodiment 1 | 7-16 |
| Y | CN 113215374 A (BAOTOU WEIFENG RARE EARTH ELECTROMAGNETIC MATERIALS CO., LTD.) 06 August 2021 (2021-08-06) description, paragraphs 2-35 | 7-16 |
| A | JP H05195062 A (NIPPON STEEL CORP.) 03 August 1993 (1993-08-03) entire document | 1-16 |
| A | JP H06256848 A (NIPPON STEEL CORP.) 13 September 1994 (1994-09-13) entire document | 1-16 |
| A | JP S61177319 A (NIPPON STEEL CORP.) 09 August 1986 (1986-08-09) entire document | 1-16 |

☑ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **26 July 2023** | **08 August 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2023/103588**

| C. | DOCUMENTS CONSIDERED TO BE RELEVANT | |
|---|---|---|
| Category* | Citation of document, with indication, where appropriate, of the relevant passages | Relevant to claim No. |
| A | US 4906530 A (KAWASAKI STEEL CORP.) 06 March 1990 (1990-03-06)<br>      entire document | 1-16 |

Form PCT/ISA/210 (second sheet) (July 2022)

**INTERNATIONAL SEARCH REPORT**
Information on patent family members

International application No.

**PCT/CN2023/103588**

| Patent document cited in search report | | | Publication date (day/month/year) | Patent family member(s) | | | Publication date (day/month/year) |
|---|---|---|---|---|---|---|---|
| JP | S63250419 | A | 18 October 1988 | JPH | 0619113 | B2 | 16 March 1994 |
| CN | 113215374 | A | 06 August 2021 | CN | 113215374 | B | 12 July 2022 |
| JP | H05195062 | A | 03 August 1993 | JP | 2678850 | B2 | 19 November 1997 |
| JP | H06256848 | A | 13 September 1994 | JP | 2679931 | B2 | 19 November 1997 |
| JP | S61177319 | A | 09 August 1986 | JPH | 0615695 | B2 | 02 March 1994 |
| US | 4906530 | A | 06 March 1990 | US | 4963197 | A | 16 October 1990 |
| | | | | EP | 0302639 | A2 | 08 February 1989 |
| | | | | EP | 0302639 | A3 | 06 February 1991 |
| | | | | EP | 0302639 | B1 | 18 May 1994 |
| | | | | DE | 3889600 | D1 | 23 June 1994 |
| | | | | DE | 3889600 | T2 | 01 September 1994 |
| | | | | JP | S6436727 | A | 07 February 1989 |
| | | | | JP | S6437003 | A | 07 February 1989 |
| | | | | JP | H0663035 | B2 | 17 August 1994 |
| | | | | JP | H07118409 | B2 | 18 December 1995 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 113272456 A
- CN 113272454 A
- CN 113286905 A

**Non-patent literature cited in the description**

- Methods of measurement of the magnetic properties of electrical steel sheet and strip by means of an Epstein frame. *GBT 3655-2008*
- Methods of measurement of density, resistivity and stacking factor of electrical steel sheet and strip. *GBT 19289-2003*